Europäisches Patentamt

European Patent Office

Office européen des brevets

(11) Veröffentlichungsnummer: **0 305 898 B1**

(19)

(12) EUROPÄISCHE PATENTSCHRIFT

(45) Veröffentlichungstag der Patentschrift: **20.05.92**

(21) Anmeldenummer: **88113862.2**

(22) Anmeldetag: **25.08.88**

(51) Int. Cl.⁵: **B01D 29/50**, C08B 11/20

(54) **Verfahren zur Abtrennung und Reinigung von Celluloseethern und anderen Cellulosederivaten.**

(30) Priorität: **02.09.87 DE 3729268**

(43) Veröffentlichungstag der Anmeldung:
**08.03.89 Patentblatt 89/10**

(45) Bekanntmachung des Hinweises auf die
Patenterteilung:
**20.05.92 Patentblatt 92/21**

(84) Benannte Vertragsstaaten:
**BE CH DE FR GB IT LI NL SE**

(56) Entgegenhaltungen:
**EP-A- 0 053 741**
**EP-A- 0 153 972**
**EP-A- 0 194 877**
**US-A- 3 451 999**

(73) Patentinhaber: **Henkel Kommanditgesellschaft
auf Aktien
Postfach 1100 Henkelstrasse 67
W-4000 Düsseldorf-Holthausen(DE)**

(72) Erfinder: **Rähse, Wilfried, Dr.
Kolhagenstrasse 44
W-4000 Düsseldorf 13(DE)**
Erfinder: **Wüst, Willi, Dr.
Fasanenring 32
W-4030 Ratingen(DE)**
Erfinder: **Kühne, Norbert
Dürerstrasse 63
W-5657 Haan 2(DE)**

(74) Vertreter: **von Kreisler, Alek, Dipl.-Chem. et al
Patentanwälte Von Kreisler-Selting-Werner,
Deichmannhaus am Hauptbahnhof
W-5000 Köln 1(DE)**

## Beschreibung

Die Erfindung richtet sich auf ein Verfahren zur Abtrennung und Reinigung von Celluloseethern und anderen Cellulosederivaten in einer Filtereinrichtung.

Aus dem Stand der Technik sind Verfahren zur Reinigung von Celluloseethern bekannt, bei denen in Zentrifugen oder Vakuumfiltern eine Fest/Flüssig-Trennung erfolgt. Bei diesen Verfahren können einerseits aus mechanischen Gründen bei den Sieböffnungsweiten bzw. den Tuchmaschenweiten bestimmte Werte nicht unterschritten werden und ist andererseits eine aus sicherheitstechnischen Überlegungen beim Einsatz von Lösungsmitteln wünschenswerte Drucküberlagerung des Reinigungsverfahrens mit einem inerten Gas, wie beispielsweise Stickstoff, nicht durchführbar. Ferner besteht für die Reinigung von Methylcellulose-Derivaten bei den bekannten Verfahren eine Temperaturobergrenze von 100 ° C, da bei den mit einem Bandfilter arbeitenden Verfahren ein Vakuum angelegt werden muß oder bei den mit Zentrifugen arbeitenden Verfahren aufgrund der Luftzirkulation eine Abkühlung erfolgt. Desweiteren benötigen die bekannten Verfahren einen relativ großen Platz-(Flächen-)Bedarf.

EP-A-0 053 741 beschreibt ein kontinuierliches Verfahren zur Abtrennung und Reinigung von Celluloseethern und anderen Cellulosederivaten aus einer Suspension, wobei in einer Filtereinrichtung die Suspensionsflüssigkeit abgetrennt, die Restflüssigkeit aus dem sich bildenden Filterkuchen entfernt, der Filterkuchen gewaschen (und schließlich vom Filter entfernt) wird.

Aufgabe der Erfindung ist es daher, die Nachteile des Standes der Technik zu vermeiden und eine Lösung zu schaffen, die die Abtrennung und Reinigung aller Celluloseether und anderen Cellulosederivate auch bei höheren Temperaturen sowie den Einsatz engmaschiger Filter ermöglicht.

Die Aufgabe wird mit den Merkmalen des Anspruches 1 gelöst. Weitere Ausgestaltungen der Erfindung sind den davon abhängigen Ansprüchen zu entnehmen.

Das erfindungsgemäße Verfahren ist sehr flexibel einsetzbar und eignet sich daher für die Aufarbeitung aller Celluloseether und deren Derivate, insbesondere auch für die Aufarbeitung thermoplastischer Hydroxypropylcellulose-Typen, da der sich abscheidende bzw. abgeschiedene Filterkuchen keiner großen mechanischen Beanspruchung unterzogen wird. Durch das erfindungsgemäße Verfahren werden weiterhin die Produktverluste erheblich vermindert und lange Standzeiten für die Filtereinrichtung erzielt.

Aufgrund der Verminderung der Produktverluste wird auch der CSB-Wert im Abwasser deutlich abgesenkt, so daß sich insgesamt beachtenswerte ökologische und ökonomische Vorteile ergeben. Bei dem erfindungsgemäßen Verfahren sind in dem Druckbehälter problemlos Temperaturen von 15 bis 130 ° C einstellbar, und ist eine Beaufschlagung des Druckbehälters mit Inertgas, beispielsweise mit Stickstoff, möglich. Desweiteren können Filtertücher mit Maschenweiten von kleiner 100 $\mu$m, insbesondere von 10 bis 30 $\mu$m eingesetzt werden und ist eine Filtertuchrückspülung unter Druck möglich. Ferner können mit dem erfindungsgemäßen Verfahren Methylcellulose-Derivate mit hohen Flockungspunkten verarbeitet werden. Schließlich zeichnet sich das erfindungsgemäße Verfahren auch durch einen geringen Platzbedarf aus.

Bei einer Anlage zur Durchführung des Verfahrens wird die Aufgabe gemäß der Erfindung durch einen Druckbehälter mit mehreren Kerzenfiltern, einer Fülleitung für Suspension, Waschflüssigkeit und Wasserdampf, einer Filtratleitung mit Einleitungsmöglichkeiten für Stickstoff, Luft, Wasserdampf und Wasser, einer Zuleitung für Gase und einem Überlauf gelöst.

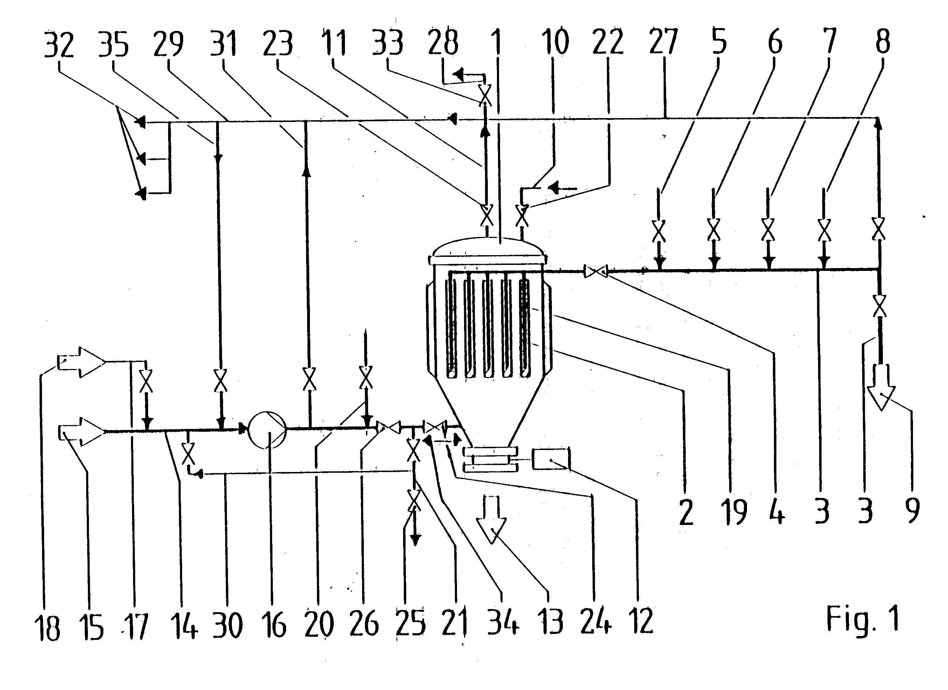

Ein Ausführungsbeispiel der Erfindung ist nachstehend anhand der Zeichnung beispielsweise näher erläutert. Diese zeigt in Figur 1 eine Prinzipskizze einer Anlage zur Durchführung des Verfahrens.

Die einzige Figur zeigt einen Druckbehälter 1 mit fünf darin angeordneten Kerzenfiltern 2. Die Kerzenfilter sind in dem vorliegenden Ausführungsbeispiel von einem monofilen PVDF-Filtertuch mit einer Maschenweite von 30 $\mu$m überzogen. Insgesamt weist die aus diesen Kerzenfiltern 2 bestehende Filtereinheit bei einem Nutzvolumen von 15,7 l eine Filterfläche von 0,31 m$^2$ auf. Die Steigrohre der Kerzenfilter 2 sind mit einer aus dem Druckbehälter 1 herausführenden Filtratleitung 3 verbunden, wobei kurz außerhalb des Druckbehälters 1 ein Ventil 4 in der Filtratleitung 3 angeordnet ist. Im weiteren Verlauf der Filtratleitung 3 sind Einleitungen für Stickstoff 5, Luft 6, Wasserdampf 7 und Wasser 8 zur Durchführung von Filtertuchrückspülungen vorgesehen. Das an den Filterkerzen 2 gewonnene Filtrat gelangt durch die Filtratleitung 3 in Pfeilrichtung 9 zu Einrichtungen für seine weitere Verwendung. Das Filtrat kann aber auch von der Filtratleitung 3 abzweigend einer Leitung 27 zugeführt werden, durch welche es in eine Leitung 17 gelangt und dann mittels einer Zuleitung 14 wieder in den Druckbehälter 1 rückgeführt wird.

Im Kopfbereich des Druckbehälters 1 ist eine Leitung 10 zur Einleitung von Stickstoff, Luft oder Wasserdampf in den Druckbehälter und ein Überlauf 11 angeordnet. Vom Überlauf 11 aus kann die dort austretende Suspension in eine Ableitung 28 oder zur Rückführung in eine Leitung 29 eingeleitet werden, von welcher über einen Verteiler 32 die Vorlagen für die Suspension, Filtrat und Waschwasser erreichbar sind.

Weiterhin weist der Druckbehälter 1 in seinem Bodenbereich einen Schieber 12 auf, durch welchen der Bodenbereich geöffnet und der bei der Filtration gewonnene Filterkuchen in Pfeilrichtung 13 dem Druckbehälter entnommen wird. Desweiteren mündet im Bodenbereich des Druckbehälters 1 die Zuleitung 14 ein, der in Pfeilrichtung 15 die aufzubereitende Suspension zur Einleitung in den Druckbehälter 1 zugeführt wird. In der Leitung 14 ist für den Transport der Suspension und die ggf. sonst eingeleiteten Flüssigkeiten eine Kreiselpumpe 16 angeordnet. Weiterhin kann der Leitung 14 über die Leitung 17 in Pfeilrichtung 18 auch eine Waschflüssigkeit zur Reinigung des sich während der Filtration an den Filterkerzen 2 gebildet habenden Filterkuchens 19 zugeführt werden. Desweiteren mündet in die Leitung 14 eine Leitung 20 ein, durch welche der Leitung 14 und dem Druckbehälter 1 Wasserdampf zugeführt werden kann. Zur Ableitung überschüssiger Suspension oder überschüssiger Waschflüssigkeit aus dem Druckbehälter 1 ist die Leitung 14 mit einer Ableitung 21 verbunden. Die Leitung 14 ist somit im Bereich des Ventils 24 bis zur Abzweigung der Ableitung 21 von zwei Seiten durchströmbar, was durch den Doppelpfeil 34 angedeutet sein soll. Ferner zweigt von der Ableitung 21 eine Leitung 30 ab, welche auf der Saugseite der Pumpe 16 in die Leitung 14 mündet. Durch die Leitung 30 ist überschüssige Suspension oder Waschflüssigkeit aus dem Druckbehälter 1 in die Leitung 14 sowie von dort über die Pumpe 16 durch die Leitungen 31, 29 und über den Verteiler 32 in die nicht gezeichneten Vorlagen rückführbar.

Zur Durchführung des erfindungsgemäßen Verfahrens wird dem Druckbehälter 1 über die Leitung 14 in Pfeilrichtung 15 zunächst eine Cellulosesuspension zugeführt. Bis zur vollständigen Befüllung des Druckbehälters 1 sind die Ventile 4 und 22 geschlossen sowie die Ventile 23, 24 und 33 geöffnet. Anschließend werden die Ventile 23, 24 und 33 geschlossen und das Ventil 4 geöffnet. Sollte der zu diesem Zeitpunkt in dem Druckbehälter 1 herrschende Druck zum Auspressen der Flüssigkeit durch die Kerzenfilter hindurch in die Filtratleitung 3 nicht ausreichend sein, wird das Ventil 22 geöffnet und durch die Leitung 10 Luft, Stickstoff oder Wasserdampf mit dem benötigten Druck eingeleitet.

Bei der nun ablaufenden Filtration bildet sich an den Kerzenfiltern der Filterkuchen 19. Zur Entleerung des Druckbehälters von der nach der Filtration verbleibenden Restmutterlauge wird anschließend das Ventil 4 geschlossen und das Ventil 24 bei geschlossenem Ventil 26 geöffnet, so daß die restliche Mutterlauge in die Leitung 21 gelangen kann. Bei geöffnetem Ventil 25 wird die Mutterlauge dann abgeleitet oder bei geschlossenem Ventil 25 in die Leitung 30 geleitet. Der für die Restentleerung notwendige Druck wird wieder durch Zuleitung von Stickstoff, Luft oder Dampf durch die Leitung 10 erzeugt. Im Anschluß daran wird auch das Ventil 4 wieder geöffnet, so daß dann Mutterlaugenreste aus dem Filterkuchen herausgepreßt werden. Nach diesem Filtrationsvorgang zum Abtrennen der aufbereiteten Celluloseether bzw. der anderen Derivate wird der Druckbehälter 1 zum Auswaschen des Filterkuchens über die Leitungen 17 und 14 mit einer Waschflüssigkeit in Pfeilrichtung 18, beispielsweise Wasser oder eine Alkohol/Wasser-Mischung, befüllt. Diese Waschflüssigkeit wird durch eine Druckbeaufschlagung des Behältnisses 1 mittels Luft oder Stickstoff durch die Leitung 10 oder mittels Wasserdampf durch die Leitungen 20 und 14 durch den Filterkuchen in die Filtratleitung 3 gepreßt. Etwaige sich im Bodenbereich des Druckbehälters 1 ansammelnden Reste der Waschflüssigkeit werden anschließend bei geschlossenem Ventil 4 in die Leitungen 14 und 21 gedrückt, wobei es auch möglich ist, die Flüssigkeit durch Leitungen 30, 14, 31 der Leitung 29 zuzuführen. Nach diesem Waschvorgang kann der Filterkuchen 19 durch Zuleitung wiederum von Luft oder Stickstoff durch die Leitung 10 oder auch Dampf bei geöffnetem Ventil 4 weiter entwässert werden. Im Anschluß an diesen Vorgang wird von der Filtratleitungsseite her durch die Leitung 5 Stickstoff oder durch die Leitung 6 Luft auf das Filtertuch gegeben, gegebenenfalls ein kurzer Druckstoß ausgeführt, und somit der Filterkuchen 19 von dem Kerzenfilter 2 abgesprengt. Daraufhin wird dann der Filterkuchen nach Öffnen des Schiebers 12 dem Bodenbereich des Druckbehälters 1 in Pfeilrichtung 13 entnommen. Zur Reinigung der Filtertücher ist auch eine Filtertuchrückspülung möglich, wozu durch die Leitungen 5, 6, 7 oder 8 die Rückspülmedien Stickstoff 5, Luft 6, Dampf 7 oder Wasser 8 in die Filtratleitung 3 eingeleitet und von der Rückseite her auf die Filtertücher geführt werden.

Alternativ dazu hat sich zur Befüllung des Behälters 1 mit Suspension und die Durchführung der Filtration auch die folgende Vorgehensweise bewährt:

Mit Hilfe der Pumpe 16 wird der Behälter 1 bei geschlossenem Ventil 4 über die Leitung 14 bis etwa zur Hälfte mit in Pfeilrichtung 15 eingeleiteter Suspension gefüllt. Anschließend pumpt man Filtratflüssigkeit, die aus der Charge davor stammt und sich in einem nicht dargestellten Behälter hinter dem Verteiler 32 befindet, über die Leitungen 17, 14 in den Druckbehälter 1, bis der Druckbehälter 1 vollständig gefüllt ist. Dann wird das Ventil 4 geöffnet und das nun gewonnene Filtrat im Kreislauf über die Leitungen 3, 27, 29, 35, 14 solange durch den Behälter 1 geführt, bis der Feststoff als Filterkuchen 19 vollständig und gleichmäßig auf den Kerzen 2 haftet. Daran schließen sich das Auspressen des Zwickelwassers sowie eine oder mehrere Wäschen an, die wie vorstehend bereits beschrieben ausgeführt werden.

In dem vorstehend beschriebenen Druckfilter sind Celluloseether, Cellulosemischether und Cellulosederivate diskontinuierlich oder kontinuierlich abzutrennen und zu reinigen. In allen Fällen wird sowohl bei dem Abtrennschritt, bei dem sich der Filterkuchen auf den Filterkerzen absetzt, als auch bei dem Reinigungsschritt mit der Waschflüssigkeit in dem Druckbehälter 1 ein Überdruck aufgebaut. Die Reinigung von Methylcellulosen und Hydroxypropylcellulosen sowie der abgeleiteten Mischether (-ester) erfolgt durch Auswaschen des Filterkuchens mit Heißwasser im Temperaturbereich von ca. 90 °C bis 130 °C, was einem Druck von 1 bis 2,7 bar entspricht. Die Reinigung von Carboxymethylcellulosen und Hydroxyethylcellulosen sowie der abgeleiteten Mischether (-ester) erfolgt mit einer Alkohol/Wasser-Mischung, wobei als Alkohol beispielsweise Methanol, Ethanol, iso-Propanol und t-Butanol oder als Keton Aceton oder Methylethylketon verwendet werden. In diesen Fällen wird in dem Druckbehälter 1 eine inerte Atmosphäre, beispielsweise durch Einleitung von Stickstoff durch die Leitung 10, eingestellt und mit Hilfe dieses eingeleiteten Gases der Überdruck aufgebaut.

Nachfolgend sind zwei Beispiele für Verfahrensabläufe aufgeführt.

## 1. Beispiel

Eine Methylhydroxyethylcellulose (MHEC), die gereinigt folgende Kenndaten aufwies,
- Brookfield-Viskosität bei 2 %iger Anrührung (MHEC rein/atro; Meßtemperatur 20,0 °C)- 28.500 mPas
- Substitutionsgrade:
Gehalt OCH$_3$     22,0 %
Gehalt EOOH     9,1 %
- Flockungspunkt     93 °C
wurde unter Überdruck bei 115 °C in einem Verhältnis MHEC (rein/atro)/Wasser von 1 : 15 in einem druckfesten Rührwerkbehälter angemaischt und anschließend in Pfeilrichtung 15 durch die Leitung 14 in den Druckbehälter 1 gepumpt. Das Filtratablaufventil 4 war geschlossen, die Temperatur im Druckbehälter 1 betrug 115 °C, was einem Behälterinnendruck von 1,7 bar entsprach.

Nach vollständiger Befüllung des Druckbehälters 1 mit der MHEC-Suspension wurden die Ventile 23, 33 des Überlaufes 11 geschlossen und das Ventil 4 in der Filtratleitung 3 so geöffnet, daß vor dem Ventil ein Druck von 1,4 bar herrschte. Nach Beendigung der Filtration wurde das Ventil 4 geschlossen und wurden die Ventile 24, 25 geöffnet, wurde im Druckbehälter durch die Leitung 10 Wasserdampf zugeführt und damit die Restentleerung der Mutterlauge durchgeführt. Anschließend wurde das Ventil 24 geschlossen und das Ventil 4 geöffnet und unter weiterer Dampfzugabe die restliche Mutterlauge aus dem Filterkuchen 19 in die Filtratleitung 3 entfernt. Insgesamt betrug die Mutterlaugenmenge 16,2 kg.

Zum Waschen des Filterkuchens 19 wurde anschließend der Druckbehälter 1 mit Wasser einer Temperatur von 120 °C, was einem Druck von 1,96 bar entsprach, gefüllt und durch den Filterkuchen 19 in die Filtratleitung gepreßt. Die in dem Druckbehälter verbleibende Restmenge wurde durch die Leitungen 14, 21 und ggf. 30, 14, 31, 29 abgeführt. Anschließend wurde der Filterkuchen durch Einleitung von Luft oder Stickstoff durch die Leitung 10 in den Druckbehälter weiter entwässert, wobei an dem Ventil 4 eine Druckdifferenz zwischen der Behälterseite und der Leitungsseite von 0,5 bar eingestellt wurde. Nach ausreichender Entwässerung des Filterkuchens wurde den Kerzenfiltern 2 dann durch die Leitungen 6 und 3 110 °C warme Luft von der Filtertuchinnenseite her zugeführt, woraufhin sich das Filtertuch aufblähte und der Filterkuchen abgesprengt wurde. Anschließend wurde der Filterkuchen dem Druckbehälter entnommen. In dem vorstehend angeführten Beispiel wurden 3,51 kg Filterkuchen mit einer Feuchte von 42,7 % = 1,5 kg MHEC rein/atro gewonnen.

Bilanz:

1,5 kg       MHEC (atro/rein)
0,4 %       NaCl im Filterkuchen
42,7 %       Restfeuchte
16,2 kg       Mutterlauge mit 4,3 % NaCl und 0,17 % organisch C
17,0 kg       Waschwasser mit 1,6 % NaCl und 0,13 % organisch C
Substanzverlust inklusive Hemicelluloseanteile (berechnet über organisch C):
3,3 %       bei Einsatz von Fichtencellulose mit alpha = 0,93.

Vergleichsversuche ergaben, daß das beschriebene Produkt sich weder im Labor bei Normaldruck noch in Zentrifugen aufarbeiten läßt, da es aufgrund des hohen Flockungspunktes in Lösung geht.

Bei Produkten mit niedrigeren Flockungspunkten und gleichem Einsatzmaterial trat bei der Aufarbeitung in Zentrifugen ein Substanzverlust von ca. 14 % auf.

2. Beispiel

Eine im Lösungsmittelgemisch Isopropanol (IPA)/Wasser hergestellte Carboxymethylcellulose (CMC) mit den Kenndaten
- Brookfield-Viskosität bei 2 %iger Anrührung (CMC rein/atro; Meßtemperatur 20.0 °C)- 4.900 mPas
- Substitutionsgrad 0,97
- Trübungszahl (CMC rein/atro; 2 %ige Lösung; Lange-Photometer mit 3,5 cm Schichtdicke)- 4 %

wurde durch weitere Zugabe von IPA/Wasser auf einen Alkoholgehalt von 65 % sowie auf ein Maischeverhältnis CMC (rein/atro): Lösungsmittel/Wasser von 1 : 15 im geschlossenen, druckfesten, mit Stickstoff überlagerten Rührwerksbehälter eingestellt.

Der Druckbehälter 1 wurde mit dieser Suspension gefüllt. Das Entfernen der Suspensionsflüssigkeit, das Entfernen des Restvolumens sowie das Entfeuchten des Filterkuchens erfolgte in analoger Weise zum Beispiel 1, wobei der Druck durch Zuleitung von Stickstoff durch die Leitung 10 auf ca. 2 bar eingestellt wurde.

Die anschließende Wäsche des Filterkuchens wurde mit einem 65 %igen Methanol/Wasser-Gemisch bei 45 °C durchgeführt. Nach Abpressen des Kuchens mit Stickstoff bei 2 bar erfolgte das Absprengen des Kuchens mittels eines Stickstoffdruckstoßes von der Filtratseite her bei Raumtemperatur sowie die Entnahme des alkoholfeuchten Kuchens.

Bilanz:

1,3 kg CMC (atro/rein)
0,4 % NaCl im Filterkuchen
48,3 % Restfeuchte
15,6 l Mutterlauge mit 1,8 % NaCl und 0,19 % organisch C
25,1 l Waschalkohol mit durchschnittlich 0,75 % NaCl und 0,09 % organisch C

Die festgestellten Substanzverluste inklusive Hemicelluloseanteile (berechnet über organisch C bei Einsatz einer Fichtencellulose mit alpha = 0,93) betrugen 4 %.

**Patentansprüche**

1. Verfahren zur Abtrennung und Reinigung von Celluloseethern und anderen Cellulosederivaten aus einer Suspension, wobei in einer Filtereinrichtung die Supensionsflüssigkeit abgetrennt, die Restflüssigkeit aus dem sich bildenden Filterkuchen entfernt, der Filterkuchen gewaschen und schließlich vom Filter entfernt wird, dadurch gekennzeichnet, daß als Filtereinrichtung ein druckbeaufschlagter Druckbehälter mit Kerzenfilter verwendet wird.

2. Verfahren nach Anspruch 1, dadurch gekennzeichnet, daß der Druckbehälter mit Wasserdampf oder Gas druckbeaufschlagt wird, das an den Kerzenfiltern gewonnene Filtrat aus dem Druckbehälter in eine Filtratleitung geleitet sowie die restliche Mutterlauge oder Suspension aus dem Druckbehälter entfernt wird, daraufhin eine mit Wasserdampf oder Gas druckbeaufschlagte Waschflüssigkeit dem Druckbehälter zugeführt und durch den Filterkuchen auf den Kerzenfiltern in die Filtratleitung gepreßt sowie die Restmenge an Waschflüssigkeit aus dem Druckbehälter entfernt wird, anschließend der Druckbehälter wieder mit Wasserdampf oder Gas druckbeaufschlagt und dieses Medium zur Entwässerung des Filterkuchens durch diesen hindurch in die Filtratleitung geführt wird und schließlich der Filterkuchen durch filtratleitungsseitige Wasserdampf- oder Gasbeaufschlagung von den Kerzenfiltern entfernt und dem Druckbehälter entnommen wird.

3. Verfahren nach Anspruch 2, dadurch gekennzeichnet, daß anschließend die Kerzenfilter zur Reinigung des Filtertuches von der Filtratleitungsseite her mit einem Reinigungsmedium unter einem Druck von 1 bis 5 bar beaufschlagt werden.

4. Verfahren nach einem der vorangehenden Ansprüche, dadurch gekennzeichnet, daß gewonnenes Filtrat und/oder überschüssige Suspension oder Waschflüssigkeit im Kreislauf in den Druckbehälter rückgeführt werden.

5. Verfahren nach einem der vorangehenden Ansprüche, dadurch gekennzeichnet, daß in dem Druckbehälter eine Temperatur zwischen 15 °C und 130 °C eingestellt wird.

6. Verfahren nach einem der vorangehenden Ansprüche,
dadurch gekennzeichnet,
daß dem Druckbehälter als Waschflüssigkeit Wasser mit einer Temperatur von 90 °C bis 130 °C oder eine Alkohol/Wasser-Gemisch, insbesondere ein Methanol/Wasser-Gemisch mit einer Temperatur von 15 °C bis 60 °C, zugeführt wird.

7. Verfahren nach einem der vorangehenden Ansprüche,
dadurch gekennzeichnet,
daß der Druckbehälter zur Entwässerung des Filterkuchens mit Wasserdampf, heißer Luft oder Stickstoff druckbeaufschlagt und dabei eine Druckdifferenz von 0,1 bis 0,7 bar zwischen dem Behälterinnenraum und dem Austritt in die Filtratleitung eingestellt wird.

8. Verfahren nach einem der vorangehenden Ansprüche,
dadurch gekennzeichnet,
daß die Filterkerzen zur Entfernung des Filterkuchens filtratleitungsseitig mit 100 bis 120 °C warmer Luft oder 15 bis 40 °C warmem Stickstoff beaufschlagt werden.

9. Verfahren nach einem der vorangehenden Ansprüche,
dadurch gekennzeichnet,
daß in dem Behälter ein Druck von 1 bis 3 bar eingestellt wird.

10. Verfahren nach einem der vorangehenden Ansprüche,
dadurch gekennzeichnet,
daß die Kerzenfilter zur Entfernung des Filterkuchens von der Filtratleitungsseite her mit einem kurzzeitigen Gas-Druckstoß beaufschlagt werden.

11. Verfahren nach einem der vorangehenden Ansprüche,
dadurch gekennzeichnet,
daß dem Druckbehälter Methylcellulose-Derivate mit normalen oder hohen Flockungspunkten, thermoplastische Produkte, wie Hydroxypropylcellulose und deren Mischether, oder Carboxymethylcellulosen, Hydroxyethylcellulosen sowie deren Derivate enthaltende, Suspension zugeführt wird.

12. Verfahren nach einem der vorangehenden Ansprüche,
dadurch gekennzeichnet,
daß Kerzenfilter mit einem monophilen PVDF-Filtertuch einer Maschenweite kleiner 100 μm, insbesondere 10 bis 30 μm, verwendet werden.

**Claims**

1. A process for the separation and purification of cellulose ethers and other cellulose derivatives from a suspension, wherein the suspension liquid is separated off in a filter unit, the residual liquid is removed from the filter cake being formed, the filter cake is washed and eventually is removed from the filter,
characterized in that the filter unit is a pressurized pressure vessel with candle filters.

2. The process according to claim 1, characterized in that the pressure vessel is pressurized with steam or gas, the filtrate recovered at the candle filters is passed into a filtrate pipe from the pressure vessel and residual mother liquor or suspension is removed from the pressure vessel, whereupon a washing liquid pressurized with steam or gas is fed to the pressure vessel and is forced through the filter cake on the candle filters into the filtrate pipe and the residual amount of washing liquid is removed from the pressure vessel, subsequently the pressure vessel is once more pressurized with steam or gas, and this medium, in order to dehydrate the filter cake, is passed through the filter cake and into the filtrate pipe, and finally the filter cake is removed from the candle filters by admission of steam or gas on the filtrate pipe side and is taken out from the pressure vessel.

3. The process according to claim 2, characterized in that, for cleaning the filter cloth, a cleaning medium is subsequently allowed to act onto the candle filters from the filtrate pipe side under a pressure of from 1 to 5 bar.

4. The process according to any of the preceding claims, characterized in that the filtrate recovered and/or excess suspension or washing liquid is/are recirculated into the pressure vessel.

5. The process according to any of the preceding claims, characterized in that a temperature of between 15 °C and 130 °C is adjusted in the pressure vessel.

6. The process according to any of the preceding claims, characterized in that water having a temperature of from 90 °C to 130 °C or an alcohol/water mixture, and especially a methanol/water mixture having a temperature of from 15 °C to 60 °C, is supplied as washing liquid to the pressure vessel.

7. The process according to any of the preceding claims, characterized in that the pressure vessel, in order to remove water from the filter cake, is pressurized with steam, hot air or nitrogen and, thereby, a pressure difference of from 0.1 to 0.7 bar is established between the interior of the vessel and the outlet into the filtrate pipe.

8. The process according to any of the preceding claims, characterized in that hot air of 100 °C to 120 °C or warm nitrogen of 15 °C to 40 °C is admitted to the filter candles from the side of the filtrate pipe, in order to remove the filter cake from the filter candles.

9. The process according to any of the preceding claims, characterized in that a pressure of from 1 to 3 bar is adjusted in the vessel.

10. The process according to any of the preceding claims, characterized in that a short-time gas pressure surge is applied to the filter candles from the side of the filtrate pipe, in order to remove the filter cake from the filter candles.

11. The process according to any of the preceding claims, characterized in that a suspension containing methyl cellulose derivatives having normal or high flocculation points, thermoplastic products such as hydroxypropyl cellulose or mixed ethers thereof, or carboxymethyl methyl celluloses, hydroxyethyl celluloses and derivatives are fed into the pressure vessel.

12. The process according to any of the preceding claims, characterized in that filter candles comprising a monofil PVDF filter cloth having a mesh width below 100 $\mu$m, and especially from 10 to 30 $\mu$m, is used.

**Revendications**

1. Procédé pour la séparation et la purification d'éthers de cellulose et d'autres dérivés de cellulose à partir d'une suspension, dans lequel le liquide de la suspension est séparé dans un dispositif filtrant, le liquide résiduel est éliminé hors du tourteau de filtration qui se forme, le tourteau de filtration est basé et enfin séparé du filtre, caractérisé en ce qu'on utilise comme dispositif filtrant un récipient tenant la pression, soumis à une pression, avec des filtres à bougies.

2. Procédé selon la revendication 1, caractérisé en ce que l'on applique une pression sur le récipient tenant la pression à l'aide d'un gaz ou de vapeur d'eau, on envoie dans un conduit de filtrat le filtrat recueilli sur les filtres à bougies, hors du récipient tenant la pression, et on élimine hors du récipient tenant la pression la suspension ou liqueur mère résiduelle, à la suite de quoi on envoie au récipient tenant la pression un liquide de lavage soumis à une pression avec de la vapeur d'eau ou un gaz et on l'injecte dans le conduit de filtrat en le faisant passer à travers le tourteau de filtration sur les filtres à bougies et on élimine la quantité résiduelle de liquide de lavage hors du récipient tenant la pression, puis on applique à nouveau une pression sur le récipient tenant la pression, avec un gaz ou de la vapeur d'eau et on envoie ce milieu dans le conduit de filtrat, en le faisant passer à travers le tourteau de filtration afin de le déshydrater, et enfin on sépare des filtres à bougies le tourteau de filtration par application de gaz ou de vapeur d'eau du côté du conduit de filtrat et on le retire du récipient tenant la pression.

3. Procédé selon la revendication 1, caractérisé en ce que, pour le nettoyage du tissu filtrant, on envoie ensuite sur les filtres à bougies, par le côté du conduit de filtrat, un agent de nettoyage sous une pression de 1 à 5 bars.

4. Procédé selon l'une quelconque des revendications précédentes, caractérisé en ce que l'on remet en circuit dans le récipient tenant la pression du filtrat recueilli et/ou de la suspension en excès ou du liquide de lavage.

5. Procédé selon l'une quelconque des revendications précédentes, caractérisé en ce que l'on ajuste dans le récipient tenant la pression une température comprise entre 15 et 130 °C.

6. Procédé selon l'une quelconque des revendications précédentes, caractérisé en ce que l'on envoie au récipient tenant la pression, en tant que liquide de lavage, de l'eau à une température de 90 à 130 °C ou un mélange d'alcool et d'eau, en particulier un mélange de méthanol et d'eau, à une température de 15 à 60 °C.

7. Procédé selon l'une quelconque des revendications précédentes, caractérisé en ce que, pour la déshydratation du tourteau de filtration, on envoie au récipient tenant la pression de la vapeur d'eau, de l'air chaud ou de l'azote et on ajuste ainsi une différence de pression de 0,1 à 0,7 bar entre entre l'intérieur du récipient et la sortie dans le conduit du filtrat.

8. Procédé selon l'une quelconque des revendications précédentes, caractérisé en ce que, pour l'enlèvement du tourteau de filtration, on applique sur les bougies filtrantes, du côté du conduit de filtrat, de l'air chaud à 100 - 120°C ou de l'azote chaud à 15 - 40°C.

9. Procédé selon l'une quelconque des revendications précédentes, caractérisé en ce que l'on ajuste dans le récipient une pression de 1 à 3 bars.

10. Procédé selon l'une quelconque des revendications précédentes, caractérisé en ce que pour l'enlèvement du tourteau de filtration, on applique sur les filtres à bougies, du côté du conduit de filtrat, une poussée de pression de gaz de courte durée.

11. Procédé selon l'une quelconque des revendications précédentes, caractérisé en ce que l'on envoie au récipient tenant la pression une suspension contenant des dérivés de méthylcellulose à points de floculation normaux ou élevés, des produits thermoplastiques, tels que l'hydroxypropycellulose et ses éthers mixtes, ou des carboxyméthylcelluloses, des hydroxyéthylcelluloses ainsi que leurs dérivés.

12. Procédé selon l'une quelconque des revendications précédentes, caractérisé en ce que l'on utilise des filtres à bougies comportant un tissu filtrant en PVDF monofil ayant une largeur de mailles inférieure à $100 \times 10^{-6}$ m, en particulier de $10 \times 10^{-6}$ m à $30 \times 10^{-6}$ m.

Fig. 1

EP 0 305 898 B1